Europäisches Patentamt

European Patent Office

Office européen des brevets

(19)

(11) Publication number: **0 000 440**
A1

(12) # EUROPEAN PATENT APPLICATION

(21) Application number: 78300128.2

(22) Date of filing: 07.07.78

(51) Int. Cl.²: **B05D7/24, B29C27/18, B29C11/00**

(30) Priority: 15.07.77 GB 29802/77

(43) Date of publication of application: 24.01.79 Bulletin 79/2

(84) Designated Contracting States: BE CH DE FR GB NL SE

(71) Applicant: IMPERIAL CHEMICAL INDUSTRIES LIMITED, Imperial Chemical House Millbank, London SW1P 3JF (GB)

(72) Inventor: Birrell, Michael Ian, Durrants, Croxley Green Hertfordshire (GB)

(74) Representative: Cooper, Alan Victor et al, Imperial Chemical Industries Limited Legal Department: Patents Thames House North Millbank, London SW1P 4QG (GB)

(54) Articles having polymethylmethacrylate surface regions and method for making such articles.

(57) Articles having polymethyl methacrylate surface regions (32) reinforced by thermoplastics (e.g. polypropylene) members (34) having a surface (33) conforming to the shape of the polymethyl methacrylate surface region (32).

Preferably a decorative sheet (36) (e.g. melded cloth) is sandwiched between the surface region (32) and the conforming surface (33).

The polymethacrylate surface region may be applied to a preformed conforming surface of the thermoplastics member by using the conforming surface as one part of a mould which defines the shape of the surface; filling the mould with a syrup of methylmethacrylate monomer and polymerizing the syrup in contact with the conforming surface.

# ARTICLES HAVING POLYMETHYL METHACRYLATE SURFACE REGIONS

This invention relates to an article (especially a piece of furniture or sanitary ware) having a polymethyl methacrylate surface region reinforced by another member.

Hitherto, so-called 'Perspex' baths have comprised a polymethyl methacrylate surface region reinforced by spraying curable polyester resin onto the back of the surface region and curing the resin to form a rigid backing which adheres to and reinforces the surface region. Such backings must be sprayed and cured in situ on the bath and cannot be pre-formed economically.

This invention provides an article having a polymethyl methacrylate surface region reinforced by a thermoplastics member having a surface shaped to conform to the shape of polymethyl methacrylate surface region. The surface region may be flat or it may be contoured and in register with a correspondingly shaped surface on the thermoplastics member. Examples of articles having flat surface regions include table tops and panels for cabinets or the fronts of drawers and examples of articles having contoured surface regions include baths, washbasins (especially vanity units) and chair shells and some or all of these articles may be designed to form a matching bathroom suite. The thermoplastics member can be preformed by mass production techniques such as melt-shaping and more particularly injection moulding, vacuum forming or rotational moulding. Additionally, thermoplastics members can easily be made with other features such as accommodation for cupboards and drawers.

An article according to the invention may be made by a method in which the polymethyl methacrylate surface region is applied to the thermoplastics member which has been pre-formed by a melt-shaping process which provides the member with a surface shaped to conform to the shape of surface region of the finished article. The polymethyl methacrylate surface region may be assembled on the conforming surface of the pre-formed thermoplastics member and held in place by bolts, rivets or clamps preferably positioned around the perimeter of the surface region or by adhesives. Contoured surfaces may be sufficiently intimately in register as to avoid the need for additional holding means especially if the surface region and thermoplastics member are resilient and the contour is shaped to define a snap-action fit between them.

Alternatively, the polymethyl methacrylate surface region may be applied to the conforming surface of the thermoplastics support by using the conforming surface as one part of a mould which defines the surface region, filling the mould with a syrup of methyl methacrylate monomer and polymerising the monomer in contact with the conforming surface so as to produce a polymethyl methacrylate surface region which is in intimate contact with the conforming surface.

A further advantage of the use of a pre-formed thermoplastics reinforcing member is that they readily permit decorative interlayers to be sandwiched between the pre-formed member and a transparent or translucent polymethyl methacrylate surface region through which the decorative interlayer is visible. Examples of interlayers include optionally printed metal foil, thermoplastics film, paper or cloth. Many interlayers can be made integral with the thermoplastics member by melt-shaping the member against the interlayer. Similarly the surface region may be made integral with many interlayers by polymerising methyl methacrylate in contact with the interlayer which may optionally already be integral with the thermoplastics member.

A preferred cloth interlayer comprises a so-called melded cloth, that is to say a cloth composed of contiguous thermoplastics fibres welded together at various points throughout the cloth. Normally the cloth comprises conjugate fibres formed from at least two chemically different thermoplastics. Preferred conjugate fibres comprise two chemically different nylons or polyethylene and polypropylene. Melded cloths have the advantage that many thermoplastics can be injection moulded onto them without penetrating through the cloth and destroying its textile appearance.

The thermoplastics members are preferably made from crystalline polyolefins such as low or high density polyethylenes or preferably homopolymers of propylene or the so-called sequential copolymers of propylene made by injecting from 2 to 15% by weight of ethylene into the latter stages of an otherwise propylene homopolymerisation process. The polyolefins preferably have melt flow indices of from 0.5 to 25 g/10 minutes (especially 1 to 4 g/10 minutes) as measured according to British Standard 2782:Part 1/105C/1976 using a 2.16 Kg load and performed at $230^{o}C$ for propylene polymers and at $190^{o}C$ for polyethylenes.

The thermoplastics members may be solid or they may comprise a structural foam, that is to say a skin of thermoplastics material enclosing a foamed core of for example foamed polyolefin or foamed polyurethane.

The polymethyl methacrylate used in the performance of this invention may be a homopolymer of methyl methacrylate or a copolymer with up to 10% by weight of copolymerisable monomers such as alkyl acrylates (especially ethyl acrylate) or styrene.

The invention is further illustrated by the following specific embodiments described with reference to the drawings in which:

Figure 1 shows a section of a bath.

Figure 2 shows on a larger scale in partial section a modification to the bath shown in Figure 1.

Figure 3 shows in partial section a further modification to the bath shown in Figure 1.

Figure 4 shows in partial section a third modification to the bath shown in Figure 1.

Figure 5 shows in section an end portion of the modified bath of Figure 2.

Figure 6 shows in section a chair shell.

Figure 7 shows in perspective the chair shell of Figure 6.

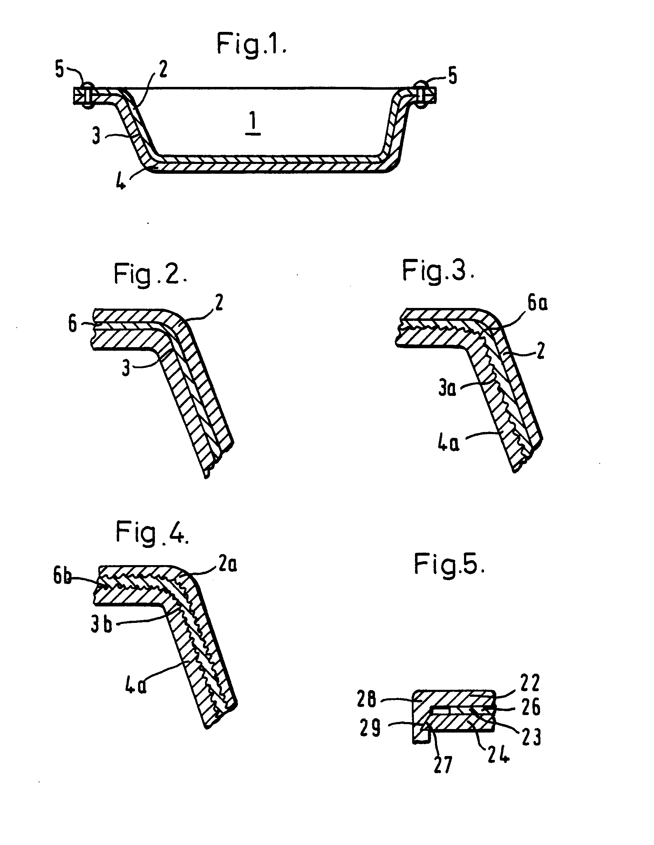

Figure 1 shows a bath 1 consisting of a vacuum-formed contoured transparent polymethyl methacrylate surface region 2 in register with a correspondingly contoured surface 3 of a polypropylene reinforcing member 4 which reinforces surface region 2. Surface region 2 is held in place by rivets 5.

Figure 2 shows a modification to bath 1 effected by sandwiching a decorative sheet 6 of melded cloth between transparent surface region 2 and surface 3. Sheet 6 is visible through surface region 2.

Figure 3 shows a further modification to bath 1 in which sheet 6a of melded cloth is integral with surface 3a of member 4a.

Figure 4 shows a third modification to bath 1 in which sheet 6b of melded cloth is integral with surface region 2a.

Figure 5 shows an end portion for a bath 1 modified as in Figure 2, the end portion consisting of a sheet 26 of melded cloth sandwiched between surface region 22 and surface 23. Surface region 22 has a down-turned end 28 into which a groove 29 has been cut. End 27 of member 24 is chamfered and makes a close fit in groove 29. Down-turned end 28 and member 24 are resilient so that on placing surface region 22 over member 24, groove 28 and chamfered end 27 engage with a snap action and hold surface region 22 in place on member 24.

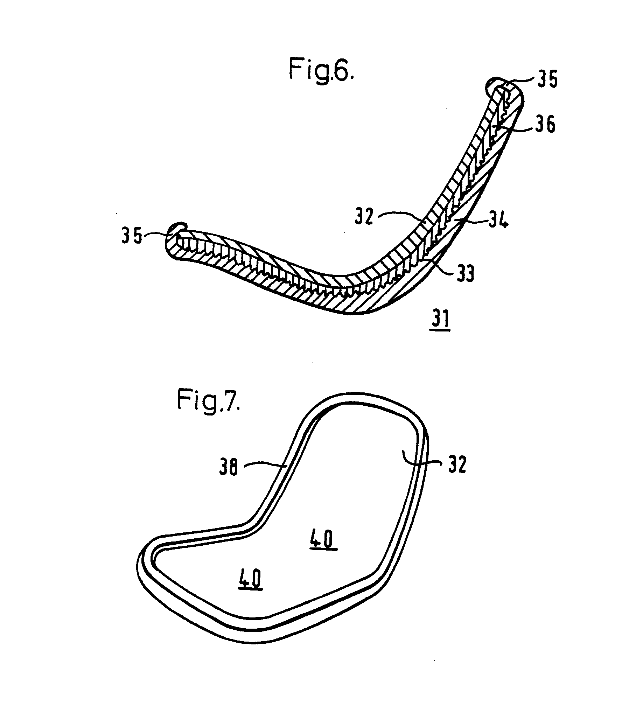

Figure 6 shows a chair shell 31 consisting of a contoured transparent polymethyl methacrylate surface region 32 in register with a correspondingly contoured surface 33 of a polypropylene reinforcing member 34 which reinforces surface region 32 and a sheet 36 of melded cloth integral with surface 33 and sandwiched between surface 33 and surface region 32. The edges 35 of member 34 are turned over and embrace the edges of surface region 32 and sheet 36 holding them in place and forming a trim 38 (as shown in Figure 7) around surface region 32. Edges 35 are resilient so that on assembling surface region 32 on member 34, edges engage surface region 32 with a snap fit.

Figure 8 shows a check pattern 40 provided on sheet 36 and visible through transparent surface region 32.

In a modification of this invention, the surface region may be made from an alternative organic thermoplastics material, preferably a transparent material instead of polymethyl methacrylate. Examples of possible transparent materials include transparent polystyrene, polyvinyl chloride, polycarbonates and cellulosic materials such as cellulose acetates and butyrates.

CLAIMS

1.  An article having a polymethyl methacrylate surface region reinforced by a thermoplastics member having a surface shaped to conform to the shape of polymethyl methacrylate surface region.

2.  An article according to claim 1 wherein the polymethyl methacrylate surface region is contoured and is in register with a correspondingly shaped surface on the thermoplastics member.

3.  An article according to claim 1 or claim 2 wherein the surface region and the thermoplastics member make a snap-action fit.

4.  An article according to any one of the preceding claims wherein a decorative interlayer is sandwiched between the surface region and the conforming surface of the thermoplastics member.

5.  An article according to claim 4 wherein the decorative interlayer comprises a melded cloth integral with the thermoplastics member.

6.  An article according to any one of claims 1 to 5 wherein the thermoplastics member comprises a structural foam.

7.  A method for making an article as claimed in claim 1 wherein the polymethyl methacrylate surface region may be applied to a preformed conforming surface of the thermoplastics member by using the conforming surface as one part of a mould which defines the shape of the surface region, filling the mould with a syrup of methyl methacrylate monomer and polymerising the monomer in contact with the conforming surface so as to produce a polymethyl methacrylate surface region which is in intimate contact with the conforming surface.

8.   A method according to claim 7 wherein the thermoplastics member is preformed by injection moulding onto a melded cloth so as to have a conforming surface integral with the melded cloth.

Fig.1.

Fig.2.

Fig.3.

Fig.4.

Fig.5.

Fig.6.

Fig.7.

| Category | Citation of document with indication, where appropriate, of relevant passages | Relevant to claim |
|---|---|---|
| | GB - A - 482 836 (ROEHM & HAAS AG) (15.05.38)<br><br>* Page 1, lines 53-94; page 2, lines 34-38,88-110; claims 1-7, 12 * | 1,2,7 |
| | GB - A - 1 332 438 (STANLEY PLAS-TICS LTD)(03-10-73)<br><br>* Page 1, lines 18-78; page 2; example 1 * | 1,2,7 |
| A | GB - A - 904 763 (H.G.MOELLER) (29-08-62) | |
| A | GB - A - 1 337 182 (A.A.CRANSTON) (14-11-73) | |

**DOCUMENTS CONSIDERED TO BE RELEVANT**

**CLASSIFICATION OF THE APPLICATION (int. Cl.³)**

B 05 D 7/24
B 29 C 27/18
B 29 C 11/00
B 29 C 6/00

**TECHNICAL FIELDS SEARCHED (Int.Cl.³)**

B 05 D 7/24
B 29 D 6/00
B 29 C 11/00
B 29 C 27/18
B 32 B

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 23-10-1978 | VAN THIELEN |

EPO Form 1503.1 06.78